# EUROPÄISCHE PATENTSCHRIFT

(11) **EP 0 863 790 B1**
(45) Veröffentlichungstag und Bekanntmachung des Hinweises auf die Patenterteilung: **14.03.2001**
(21) Anmeldenummer: 96922727.1
(22) Anmeldetag: 24.07.1996
(51) Int. Cl.: B01D 53/86

(54) **RAUCHGASREINIGUNGSANLAGE**
FLUE-GAS CLEANING INSTALLATION
INSTALLATION D'EPURATION DES GAZ DE FUMEE

(30) Priorität: 08.09.1995 CH 255595
(43) Veröffentlichungstag der Anmeldung: 16.09.1998
(73) Patentinhaber: ELEX AG, 8603 Schwerzenbach (CH)
(72) Erfinder: LEIBACHER, Ulrich, CH-8340 Hinwil (CH); ECKERT, Walter, CH-8603 Schwerzenbach (CH)
(74) Vertreter: Patentanwälte Breiter + Wiedmer AG
(86) Internationale Anmeldenummer: CH9600266
(87) Internationale Veröffentlichungsnummer: WO9709112

(56) Entgegenhaltungen:
- EP-A- 0 519 225
- DE-A- 3 032 927
- JP-A- 60 183 026
- US-A- 4 285 838
- US-A- 4 721 699

## Beschreibung

Die Erfindung bezieht sich auf eine Anlage zur Reinigung der Abgase eines Zement-Drehrohrofens nach dem Oberbegriff von Patentanspruch 1.

Industrieofenanlagen, welche in der Zementindustrie eingesetzt werden, stellen bezüglich der Gasreinigung immer ein besonderes Problem dar. Problematisch sind neben der hohen Abgastemperatur von beispielsweise 250 - 400°C auch die durch die Bauart des Wärmetauschers sowie die ablaufenden Kreisprozesse beeinflusste Staubstruktur. Es entstehen Abgase, welche staub- und gasförmige Schadstoffe enthalten. Die festen Bestandteile werden seit Jahrzehnten mit zunehmenden Wirkungsgraden abgeschieden. In bezug auf gasförmige Bestandteile hat die Abgasreinigung erst in jüngerer Zeit einen Stand erreicht, der als umweltverträglich bezeichnet werden kann. Bei der Verbrennung entstehen neben CO und Kohlenwasserstoffen insbesondere auch zu entfernende Stickoxid-Verbindungen, welche als NOₓ bezeichnet werden. Unter besonderen Randbedingungen, insbesondere bei starker Sonneneinstrahlung und bei hoher Konzentration von Kohlenwasserstoff-Verbindungen in der Umgebung, kann innerhalb von Stunden ein dem Stickoxidgehalt zuzuschreibender Ozonüberschuss erzeugt werden, welcher die Toleranzgrenzen überschreitet. Weiter tragen die Stickoxide zu einer Säurebildung in der Atmosphäre bei, weil ein Teil des NO₂ in Salpetersäure überführt wird.

Als technisch ausgereiftes Verfahren steht die katalytische Entstickung, insbesondere mit einem selektiv wirkenden Reduktionskatalysator (SCR), zur Verfügung. Dabei wird nach dem bekannten Stand der Technik z.B. Ammoniak in den Abgasstrom eingedüst, was bewirkt, dass sich auf der Katalysatoroberfläche die im Abgas enthaltenen Stickoxide in Stickstoff und Wasser umwandeln.

In der US,A 4721699 wird eine Katalysatorstruktur mit individuellen Keramikplatten zur Entfernung von Stickstoffoxiden aus Abgasen von Motoren beschrieben. Die Abriebfestigkeit der Platten wird so ausgewählt, dass der durch die Strömungskanäle fliessende Staub der Abgase die Plattenoberflächen in etwa gleichem Ausmass abträgt, wie die Katalysatoroberfläche durch die Stickstoffoxide desaktiviert wird. Dadurch wird die Katalysatoroberfläche zur Reaktion mit Stickstoffoxiden laufend erneuert. Der Abgasstrom führt den Staub und das abgetragene Material durch die Katalysatorstruktur hindurch zu einem implizit erwähnten Staubabscheider. Wenn der Abtrag der desaktivierten Katalysatorflächen zu gering ist, wird Staub zugegeben. Bei als gross bezeichneten Staubchargen von 25 bis 50 g/m³ liegt die Querschnittsfläche bei 10 bis 20 mm², was bei Quadratform einer linearen Dimension (Seitenlänge) von etwa 3,2 bis 4,5 mm, bei Kreisform einer solchen (Durchmesser) von etwa 3,5 bis 5,1 mm entspricht. Die Abgase aus fossilbefeuerten Öfen und solchen aus der Zementindustrie haben grundsätzlich verschiedene Eigenschaften und fallen in wesentlich unterschiedlicher Menge/Volumen an, weshalb auch Reinigungsanlagen von fossilbefeuerten Öfen und Zement-Drehrohröfen nicht miteinander vergleichbar sind.

Die EP,A1 0519225 beschreibt eine industrielle Ofenanlage mit einer ersten Filterstufe zur Entstaubung der zu reinigenden Abgase. In wenigstens einer weiteren Filterstufe werden die entstaubten Abgase bei wenigstens teilweiser NOₓ-Reduzierung, unter Verwendung eines kohlenstoffhaltigen Filtermediums, von den enthaltenenen NHₓ-Verbindungen und/oder flüchtigen Schadstoffelementen und -verbindungen gereinigt. Der in der ersten Filterstufe abgeschiedene Filterstaub wird aufgearbeitet und der Wiederverwendung zugeführt.

In der DE,A1 3601917 wird ein Verfahren für die Rauchgasreinigung, insbesondere der Rauchgase von Abfallverbrannunganlagen von Stick- und Schwefeloxiden, Kohlenwasserstoffen, Dioxinen und Stäuben offenbart. Die Rauchgase der Verbrennungsanlage werden über eine Nachbrennkammer mit Primär- und Sekundärstaubfilter zu einem sogenannten DENOX-Katalysator geführt, einem ersten Reduktionskatalysator, in welchem die Stickoxide sowie ggf. auch die Schwefeloxide zu elementarem Stickstoff bzw. Schwefel reduziert werden. In einer Kette von weiteren Aggregaten wird das gereinigte Rauchgas einem Kamin zugeführt.

Als Elektrofilter ausgebildete Staubabscheider werden beispielsweise in der Zeitschrift Zement-Kalk-Gips (ZKG International) Jahrgang 35 (1982) Heft 10, Seiten 509 bis 518 beschrieben. Das Schwergewicht wird dabei auf die Entstaubung, insbesondere auf die Konditionierung der staubförmigen Partikel mit Wasser vor dem Einleiten in einen Elektrofilter dargelegt. Anstelle eines Elektrofilters können zur Entstaubung auch filternde Abscheider, beispielsweise Schlauchfilter, eingesetzt werden. Das entstaubte Abgas kann dann zur Entfernung der gasförmigen Schadstoffe wenigstens einem Reduktionskatalysator zugeführt werden.

Der vorliegenden Erfindung liegt die Aufgabe zugrunde, eine Anlage zur Reinigung der Abgase eines Zement-Drehrohrofens der eingangs genannten Art zu schaffen, welche insbesondere in der Zementindustrie mit hohem Wirkungsgrad des Katalysators einsetzbar ist, praktisch wartungsfrei arbeitet und die Schadstoffe in einem Arbeitsgang ohne Anfall von Reststoffen beseitigt. Spezielle und weiterbildende Ausführungsformen der Erfindung sind Gegenstand von abhängigen Patentansprüchen.

Die Aufgabe wird erfindungsgemäss nach dem Kennzeichen von Patentanspruch 1 gelöst.

Nach bekannten andern Ausführungsformen einer Abgasreinigungsanlage mit einem Zement-Drehrohrofen gemäss vorliegender Erfindung, wird das Rohgas vorerst entstaubt und erst anschliessend einem Reduktionskatalysator zugeführt. Dieser reduziert z.B. Stickoxid-Verbindungen, CO und Kohlenwasserstoffe.

In der industriellen Praxis sind ausser dem Reduktionskatalysator und dem bevorzugt als Elektrofilter oder Schlauchfilter ausgebildeten Staubabscheider zweckmässig weitere Aggregate eingebaut:
- In einem Verdampfungskühler an sich bekannter Bauart werden die staubförmigen Partikel mit Wasser konditioniert und abgekühlt, damit im Staubabscheider optimale Abscheidebedingungen entstehen, oder beim Einsatz eines Schlauchfilters die für das Filtermaterial einzuhaltende Höchsttemperatur nicht überschritten wird. In einer für die Zementindustrie bestimmten Anlage kann der aus dem Reduktionskatalysator austretende Abgasstrom wenigstens teilweise über eine Rohmehlmühle geführt werden.
- Weiter kann ein Oxidationskatalysator ebenfalls an sich bekannter Bauart eingesetzt sein.
- Das aus dem Elektrofilter austretende Reingas wird wie üblich über einen Kamin oder dgl. an die Atmosphäre abgelassen.

Der Reduktionskatalysator ist von wabenförmigem Grundmuster. Er hat längslaufende, von Trennwänden gebildete Durchflusskanäle von beispielsweise quadratischem, rechteckigem, rundem, dreieckigem oder sechseckigem Querschnitt. Die Querschnittsformen sind an sich beliebig, jedoch zweckmässig von regelmässiger Form. Bekannte Reduktionskatalysatoren haben Durchflusskanäle mit einer minimalen linearen Dimension von 3 bis 4 mm. Unter der linearen Dimension wird z.B. bei Quadraten und Rechtecken die Seitenlänge, bei runden Querschnitten der Durchmesser, bei hexagonalen Querschnitten der Abstand der Seitenflächen verstanden.

Erfindungsgemass liegen die minimalen linearen Dimensionen der Kanalquerschnitte bei wenigstens etwa 10 mm, insbesondere bei 10 bis 20 mm. Die Wandstärken sind entsprechend den mechanischen Anforderungen ausgebildet, sie liegen bei einem oder wenigen Millimetern.

In der industriellen Praxis ist der Reduktionskatalysator bzw. dessen Katalysatorträger zweckmässig modular aufgebaut. Dies ergibt einen einfachen Aufbau und ein leichtes Auswechseln von allenfalls defekten Katalysatorteilen.

Bevorzugt umfasst der Reduktionskatalysator nicht nur eine einzige, sondern mehrere nacheinander angeordnete Wabenlagen, insbesondere drei bis fünf. Diese liegen zweckmässig nicht unmittelbar aufeinander, sondern sind in Abstand angeordnet, damit sich das Abgas neu durchmischen kann. Der Zwischenraum kann beispielsweise etwa der Länge der Durchflusskanäle in den Waben entsprechen. Je nach den zu reduzierenden Schadstoffkomponenten umfassen die Wabenlagen das gleiche oder verschiedene Katalysatormaterialien.

Der Katalysatorträger besteht vorzugsweise aus wenigstens oberflächlich porösem Katalysatormaterial. In die offenen Poren und/oder Mikroporen ist ein katalytisch wirksames Material integriert, welches die Reaktionstemperatur wesentlich herabsetzt und so den Prozess beschleunigt.

In an sich bekannter Weise besteht das katalytisch wirksame Material des Reduktionskatalysators bevorzugt aus aktiven Metalloxiden, welche selektiv reduzierend wirksam sind. Als besonders geeignet hat sich Titandioxid (TiO₂) als keramisches Trägermaterial mit Vanadiumpentoxid (V₂O₅) als aktive Hauptkomponente erwiesen, welche weitere Komponenten enthalten kann, beispielsweise Wolframoxid. Weitere katalytisch aktive Substanzen basieren beispielsweise auf Eisenoxid, gemischt mit weiteren Metalloxiden.

In bekannten gattungsgemässen Anlagen ist es üblich, die wenigstens teilweise entstaubten Abgase horizontal oder von oben in die Durchflusskanäle des Reduktionskatalysators zu leiten. Insbesondere bei der etwa vertikalen Einleitung von oben bilden sich auf den Trennwänden des Katalysators keilförmige Staubablagerungen, welche vom Abluftstrom stossweise mitgerissen werden und so zu Verstopfungen im Katalysator führen können.

Erfindungsgemäss sind die Durchflusskanäle des Reduktionskatalysators stark geneigt bis senkrecht angeordnet, wobei Mittel vorgesehen sind, welche zum Anströmen von unten führen. Diese Mittel können beispielsweise Umlenkbleche sein. Vorzugsweise ist der Reduktionskatalysator direkt neben dem Zement-Drehrohrofen angeordnet, mit einer Umlenkung und einem etwa vertikalen Zuflussrohr.

Nach dieser bevorzugten Ausführungsform können sich keine Staubkeile oder dgl. anlagern und stossförmig mitgerissen werden, die Staubchargen bleiben gleichmässig verteilt.

An den Wänden der Durchflusskanäle in den Waben des Reduktionskatalysators lagern sich nur geringe Staubmengen ab. Diese werden vorzugsweise regelmässig durch Druckluftreinigung ausgeblasen und führen zu keinen für den Katalysator in seinem Normalbetrieb störenden Einwirkungen. Je nach der Grösse der Anlage und Staubchargierung kann das Ausblasen mit Druckluft manuell oder durch programmgesteuert wandernde Düsenleisten oder dgl. erfolgen.

Die Durchflusskanäle des Reduktionskatalysators sind, wenn sie nicht in der bevorzugten, etwa vertikalen Richtung verlaufen, bei einem optimalen Betrieb bis höchstens etwa 45° geneigt.

Nach einer weiterbildenden Ausführungsform der Erfindung sind die Wandquerschnitte der Waben des Reduktionskatalysators stromauf durch wenigstens eine etwa deckungsgleiche Schablone abgeschirmt.

Diese Schablone liegt vorzugsweise nicht direkt auf der schlagempfindlichen Wabenstruktur auf, sondern hat einen geringen Abstand davon. Die Schablone besteht aus klopf- und temperaturfestem Material, welches auch nicht korrosionsanfällig ist. Eine Staubabscheidung oder gar die Bildung der vorerwähnten Keile kann verhindert werden, indem die Schablone regelmässig beklopft, gerüttelt oder vibriert wird. Dies erfolgt manuell oder durch die Anordnung eines entsprechenden, vorzugsweise programmgesteuerten Mechanismus.

Nach einer ersten Variante hat eine einzige Schablone einen geringen Abstand von den Waben, beispielsweise einige Millimeter. Nach weiteren Varianten sind mehrere Schablonen angeordnet, sie haben einen Abstand von mehreren Zentimetern oder Dezimetern, bezüglich der Durchflussöffnungen können sie auch versetzt sein.

Die Abschirmschablonen bestehen bevorzugt aus einem entsprechend der Wabenstruktur perforierten, korrosionsfesten Metallblech. Kunststoffplatten können in der Regel die Anforderungen an die Temperaturbeständigkeit nicht erfüllen.

Die Perforation in den Schablonen entspricht insbesondere bezüglich des Rasters zweckmässig der Wabenstruktur, sie kann jedoch auch davon abweichen.

Mit der erfindungsgemässen Anordnung des Reduktionskatalysators unmittelbar nach einem Zement-Drehrohrofen, kann dieser dank der hohen Abgastemperatur im Bereich von 250 bis 400°C sicher betrieben werden. Die Abgastemperatur ist für eine katalytische Entstickung ohne Verwendung von Fremdenergie optimal. Die im Abgas vorhandenen Schwefelverbindungen dagegen reagieren in diesem Temperaturbereich nicht, was Verstopfungen im Katalysator und die Beeinträchtigung von nachfolgenden Einrichtungen im Abgasweg verhindert.

Die Vorteile bezüglich der stromauf angeordneten Schablone/n, des vergrösserten Querschnitts des Durchflusskanals der Waben und/oder das Anströmen des Reduktionskanals von unten ergeben sich auch in Anlagen mit anderen als Zement-Drehrohröfen, beispielsweise Oefen für die Entsorgung von Siedlungs- und Industrieabfällen aller Art.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine Anlage zur Reinigung des Abgases eines Zement-Drehrohrofens,
- Fig. 2 ein Schema der Entstickungsreaktion,
- Fig. 3 ein Modul eines Wabenkatalysators,
- Fig. 4 eine vergrösserte Ansicht eines mit einer Schablone abgedeckten Durchflusskanals des Wabenkanals gemäss Fig. 3, und
- Fig. 5 eine aufgeschnittene Ansicht gemäss Linie V-V in Fig. 4.

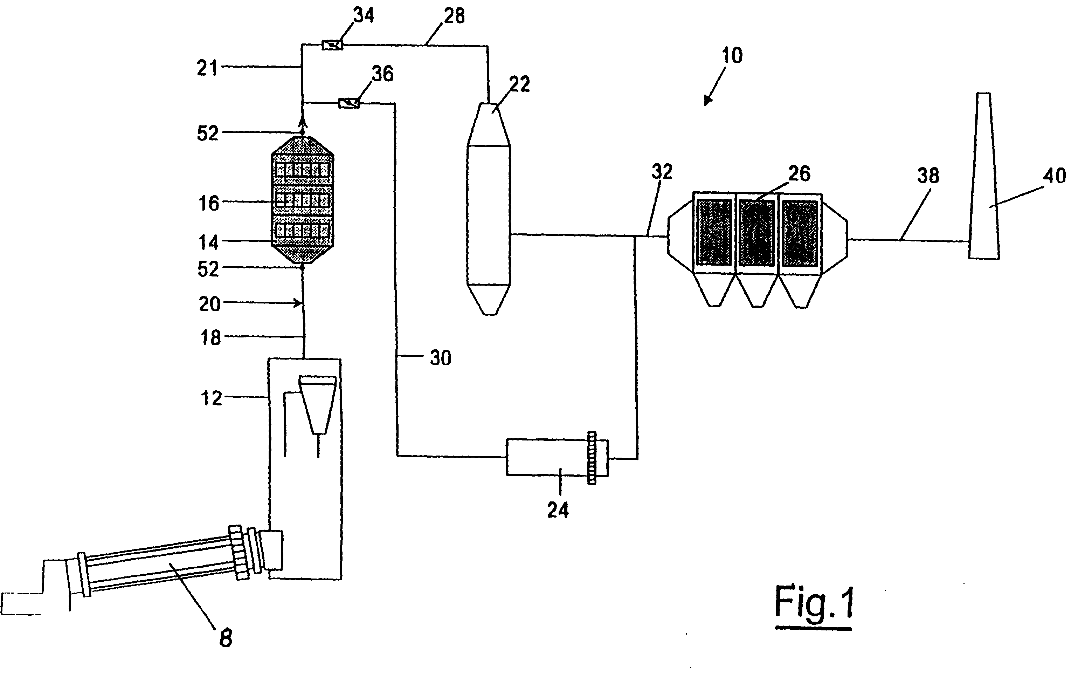

Eine in Fig. 1 dargestellte Anlage 10 dient der Reinigung der Abgase eines Zement-Drehrohrofens 8 mit Wärmetauscher 12. Unmittelbar nach dem Zement-Drehrohrofen 12 ist ein Reduktionskatalysator 14 angeordnet, welcher drei katalytisch wirksame Lagen 16 von modulartigem Aufbau umfasst. Zwei gleiche Lagen dienen der Reduktion von NOₓ, die unterschiedliche dritte Lage der Reduktion von CO und Kohlenwasserstoffen. Alle drei Lagen umfassen an sich bekannte Katalysatormaterialien. Im Verbindungsrohr 18 vom Zement-Drehrohrofen 12 zum Reduktionskatalysator 14, auch Abgasrohr genannt, mündet eine Reduktionsmittelleitung 20, über welche beispielsweise Ammoniak oder Harnstoff eingedüst wird. Zu diesem Zweck sind im Verbindungsrohr 18 nicht sichtbare Düsenlanzen eingelegt, welche das Reduktionsmittel im Abgasstrom gleichmässig fein verteilen. Der Reduktionskatalysator 14 ist zweckmässig nicht wie gezeichnet über, sondern neben dem Zement-Drehrohrofen 8 angeordnet. Das Abgas wird auch dann, wie in Fig. 1 dargestellt, von unten in den Reduktionskatalysator 14 geleitet.

Die dem Katalysator 14 nachgeschaltete Leitung 21 verzweigt sich in eine Leitung 28 für den Direktbetrieb über einen Verdampfungskühlturm 22 und in eine Leitung 30 für den Mühlenbetrieb mittels einer Rohmehlmühle 24. Vor einem Staubabscheider 26, im vorliegenden Fall ein Elektrofilter, vereinigen sich die beiden Leitungen 28, 30 wieder zu einer gemeinsamen Leitung 32. Der Direktbetrieb und/oder Mühlenbetrieb werden in an sich bekannter Weise mit zwei Stellklappen 34, 36 geregelt. Eine Reingasleitung 38 führt zu einem Kamin 40.

Im Zufluss- und Abflussstutzen des Reduktionskatalysators 1-4 ist je ein Messfühler 52 für die NOₓ-Konzentration angeordnet. Diese steuern über eine nicht dargestellte Elektronik eine Dosierpumpe für in einem Tank gelagerte Reduktionsmittel, im vorliegenden Fall eine 25%-ige wässrige Ammoniaklösung, welche über die Reduktionsmittelleitung 20 eingedüst wird.

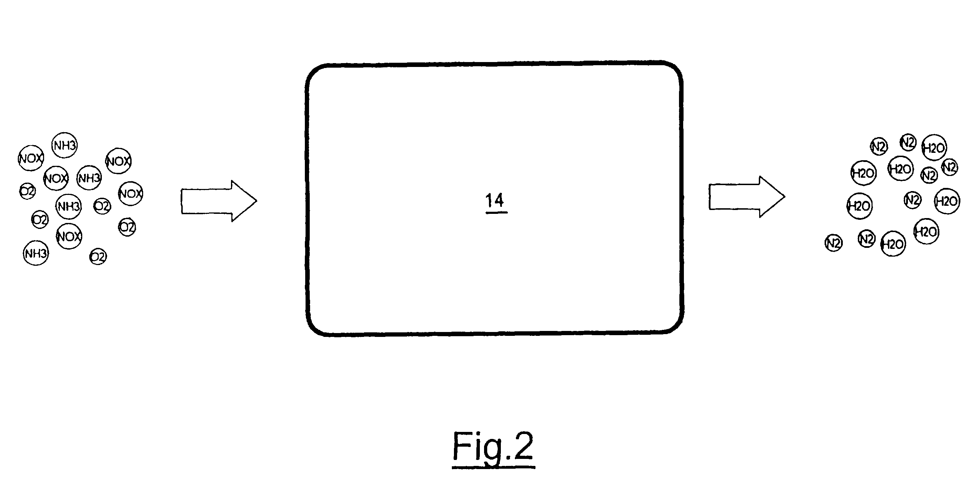

In Fig. 2 ist die Entstickung der Stickgase NOx in einem Reduktionskatalysator 14 schematisch aufgezeichnet.

Das im Abgas enthaltene Stickstoffoxid wird in einem sogenannten SCR-Verfahren (Selective Catalytic Reaction) mit Hilfe von Ammoniak reduziert. Dabei entsteht Stickstoff und Wasser. Es fallen keine anderen Stoffe oder Rückstände an. Die dabei ablaufenden chemischen Reaktionen sind in den nachfolgenden Formeln dargestellt:

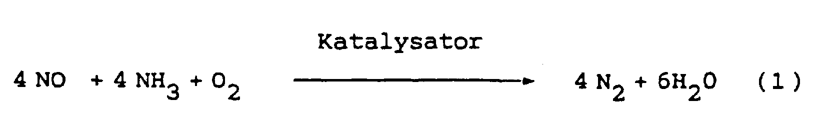

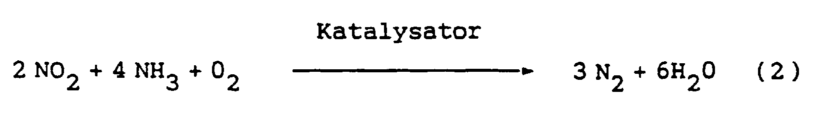

Die Entstickung der Abgase aus einem Zement-Drehrohrofen, läuft hauptsächlich gemäss Formel 1 ab, da in den Abgasen vorallem NO und nicht NO₂ vorhanden ist.

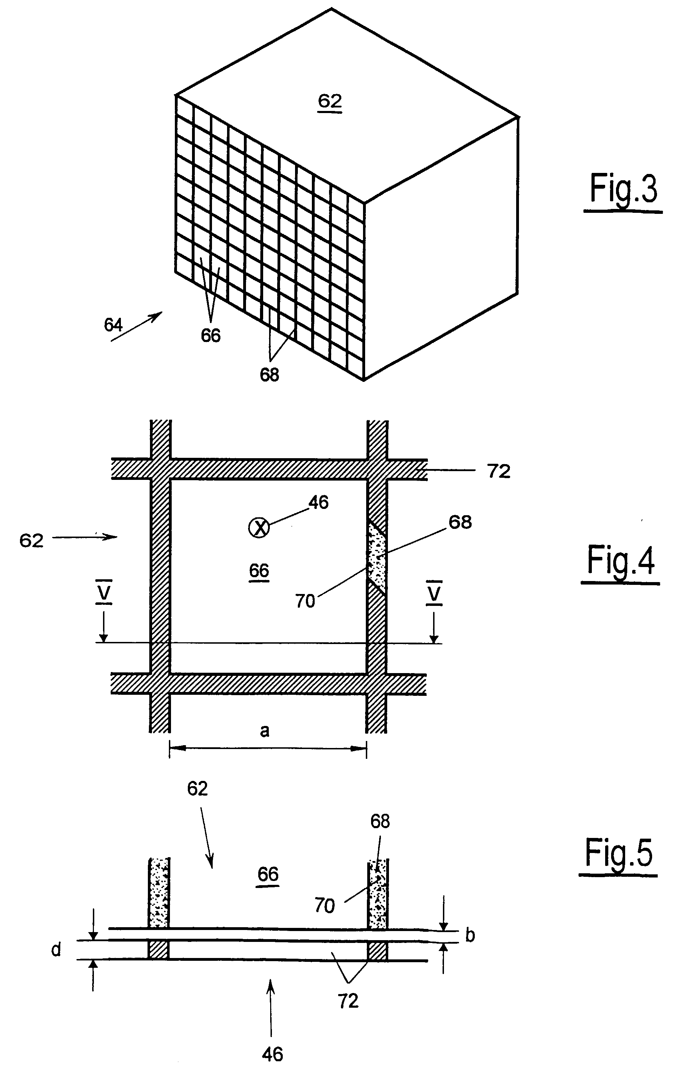

Ein für die Durchführung der Reaktionen (1) und ( 2) dienender Waben-Katalysator 62 bzw. ein Modul davon ist in Fig. 3 perspektivisch dargestellt. Dieser weist in Richtung des Pfeils 64 verlaufende Durchflusskanäle 66 quadratischen Querschnitts auf. Die Aussen- und Trennwände 68 bestehen aus keramischem Material, welches wenigstens an der Oberfläche 70 (Fig. 4, 5) mikroporös ausgebildet ist.

Die modularen Wabenkatalysatoren 62 können mit ihren Seitenflächen aneinander- und/oder hintereinandergelegt werden, bis die erforderlichen Dimensionen erreicht sind. Mit an sich bekannten Dichtungsmitteln wird ein Schlupf vermieden oder zumindest stark vermindert.

Fig. 4 zeigt die Ansicht eines innenliegenden Durchflusskanals 66 mit dem angrenzenden Teil der benachtbarten Kanäle. Das Abgas 46 strömt in Blickrichtung betrachtet nach hinten. Die lineare Dimension des Querschnitts des Durchflusskanals ist mit a bezeichnet. Im vorliegenden Fall eines quadratischen Rasters sind die beiden charakteristischen linearen Dimensionen a gleich.

Bezüglich des Abgases 46 stromauf ist eine Schablone 72 aus einem metallischen Blech in Abstand über dem Wabenkatalysator 62 (Fig. 3) angeordnet. Aus dem Blech sind quadratische Löcher ausgestanzt, welche etwa dem Querschnitt der Durchflusskanäle 66 entsprechen. Diese Schablone 72 ist schlagfest und dient dem Klopfen, Rütteln oder Vibrieren. Der darunterliegende Wabenkatalysator 62 aus keramischem Material würde im Dauerbetrieb keiner dieser Bewegungen widerstehen und rasch abbröckeln.

Aus Fig. 5 geht hervor, dass die Schablone 72 einer Dicke d vom Wabenkatalysator einen Abstand b hat. Beispielsweise beträgt die Dicke d etwa 2mm, der Abstand b etwa 5mm. In der industriellen Praxis besteht die Schablone 72 auch aus mehreren Lagen von gestanzten Blechstreifen, deren resultierender freier Querschnitt höchstens etwa dem Katalysator-Pitch entspricht. Der Abstand b liegt in diesem Fall bei 10 bis 100 cm.

### Beispiel zum Betrieb einer Anlage

Das Stickstoffoxide enthaltende Abgas 46 wird zur SCR-Reinigung mit eingedüstem Ammoniak versetzt und in einen Reduktionskatalysator 14 eingeleitet. Dabei entsteht Stickstoff und Wasser. Es fallen keine anderen Oxide oder Rückstände an. Die dabei ablaufenden chemischen Reaktionen (1) und (2 ) sind in Fig. 2 dargestellt und beschrieben.

Nach der Einleitung in den Reduktionskatalysator 14 mit Waben 62 wird in einem ersten Schritt Ammoniak in den Mikroporen der Katalysatoroberfläche 70 gespeichert. Im Abgas 46 vorhandenes NOₓ reagiert in den Mikroporen sofort mit dem gespeicherten Ammoniak. Der Katalysator bewirkt dabei, dass diese Reaktion schon ab 200°C einsetzt. Ohne Katalysator würde die Reaktion erst ab etwa 650°C einsetzen. Der Reduktionskatalysator 14 selbst besteht aus keramischem TiO₂ als Trägermaterial und V₂O₅ als reaktives Metalloxid.

Bei der Festlegung eines unteren Grenzwertes für die Arbeitstemperatur des Katalysators hat sich ergeben, dass sich mit Abnahme der Temperatur vermehrt Ammoniak-Schwefel- und Ammoniak-Chlorverbindungen bilden, welche die Aktivität des Katalysators vermindern. Beispiele für derartige Verbindungen sind Ammoniumsulfat, Ammoniumhydrogensulfat und Ammoniumchlorid. Aus diesen Gründen liegt der untere Grenzwert für die Eindüsung von Ammoniak bei etwa 250°C.

Die für die Reduktion notwendige Ammoniak-Menge wird aufgrund der im Roh- und Reingas gemessenen NOₓ-Menge bestimmt und über die Leitung 20 in den Abgasstrom 46 eingedüst. Der Reduktionskatalysator 14 besitzt eine natürliche Speicherkapazität für das Ammoniak, so dass die NOx-Schwankungen im Rohgas aufgefangen werden können.

Das für die katalytische Entstickung benötigte Ammoniak wird aus Sicherheitsgründen als Ammoniakwassergemisch (= Salmiakgeist) in mit entsprechenden Sicherheitsvorrichtungen versehenen Lagertanks vorgehalten. Das Gemisch wird entweder vorgängig der Eindüsung in den Abgasstrom in einem separaten Verdampfer oder nach der Eindüsung im Abgasstrom selbst verdampft.

Die Reduktionsmitteleindüsung erfolgt über mehrere Düsenlanzen oder -leisten, welche im Verbindungsrohr 18 des Zement-Drehrohrofens 12 und des Reduktionskatalysators 14 eingebaut sind. Durch das so entstehende Düsengitter wird eine gleichmässige Eindüsung des Reduktionsmittels gewährleistet. Das Abgas mit dem eingedüsten Reduktionsmittel kann nachfolgend über Mischeinrichtungen geleitet werden, um eine homogene Vermischung sicherzustellen.

Die erfindungsgemässe Anlage zur Abgasreinigung kann in Erfüllung der Aufgabe wirtschaftlich und technisch effizient Schadstoffe ohne Anfall von Reststoffen beseitigen und ist besonders vorteilhaft in der Zementindustrie und artverwandter Industrie einsetzbar.

## Patentansprüche

1. Anlage (10) zur Reinigung der Abgase eines Zement-Drehrohrofens mit Wärmetauscher (12), welche wenigstens einen Reduktionskatalysator (14) mit einem wabenförmigen Grundmuster für gasförmige Schadstoffkomponenten mit eingangsseitiger Reaktionsmitteleindüsung (20) und einen Staubabscheider (26) umfasst,
dadurch gekennzeichnet, dass
der Reduktionskatalysator (14)
- unmittelbar nach dem Drehrohrofen (12), also vor der Entstaubung, angeordnet ist,
- Mittel zum Anströmen von senkrechten oder bezüglich der Vertikalen höchstens etwa 45° geneigten Durchflusskanälen (66) des Reduktionskatalysators (14) von unten aufweist, und
- Durchflusskanäle (66), deren Querschnitt minimale lineare Dimensionen (a) von wenigstens 10 mm hat,
aufweist.

2. Anlage (10) nach Anspruch 1, dadurch gekennzeichnet, dass der Reduktionskatalysator (14) Durchflusskanäle (66) mit linearen Dimensionen von (a) 10 - 20 mm hat.

3. Anlage (10) nach Anspruch 1 oder 2, dadurch gekennzeichnet, dass der Reduktionskatalysator (14) wenigstens eine modular aufgebaute katalytische Lage (16) aus wabenförmigem Keramikmaterial umfasst, wobei mehrere Lagen (16) vorzugsweise in Abstand angeordnet sind und wenigstens je eine Lage der Reduktion von NOₓ einerseits und/oder CO und Kohlenwasserstoffen andererseits dient.

4. Anlage (10) nach Anspruch 3, dadurch gekennzeichnet, dass das Keramikmaterial wenigstens oberflächlich eine poröse, vorzugsweise mikroporöse Struktur mit integriertem, katalytisch wirksamen Material aufweist.

5. Anlage (10) nach einem der Ansprüche 1 bis 4, dadurch gekennzeichnet, dass das in den Durchflusskanälen (66) katalytisch wirksame Material zur Reduktion von NOₓ aus aktiven Metalloxiden besteht.

6. Anlage (10) nach Anspruch 5, dadurch gekennzeichnet, dass das katalytisch wirksame Material aus selektiv wirksamem Vanadiumpentoxid besteht.

7. Anlage (10) nach einem der Ansprüche 1 bis 6, dadurch gekennzeichnet, dass die Wandquerschnitte (68) der Waben (62) des Reduktionskatalysators (14) stromauf durch wenigstens eine Schablone (72) abgeschirmt sind, welche vorzugsweise nicht direkt auf der Wabenstruktur aufliegt.

8. Anlage (10) nach Anspruch 7, dadurch gekennzeichnet, dass ein auf die Abschirmschablone (72) einwirkender Klopf-, Rüttel- oder Vibrationsmechanismus ausgebildet ist.

9. Anlage (10) nach Anspruch 7 oder 8, dadurch gekennzeichnet, dass die Abschirmschablone (72) aus wenigstens einem etwa entsprechend der Wabenstruktur perforierten Metallblech oder entsprechenden Blechstreifen besteht.

## Claims

1. Plant (10) for cleaning the exhaust gases of a cement rotary tubular kiln with heat exchanger (12) which has at least one reduction catalyst (14) with a honeycomb-shaped basic pattern for gaseous pollutant components with reaction agent injection (20) on the input side, and a dust separator (26),
characterised in that
the reduction catalyst (14)
- is arranged immediately after the rotary tubular kiln (12) i.e. before dust removal,
- has means for introducing the flow from below into flow channels (66) of the reduction catalyst (14) which are arranged vertically or angled at most by approximately 45° from the vertical, and
- has flow channels (66) of which the cross-section has minimum linear dimensions (a) of at least 10 mm.

2. Plant (10) according to claim 1, characterised in that the reduction catalyst (14) has flow channels (66) with linear dimensions (a) of 10 to 20 mm.

3. Plant (10) according to claim 1 or 2, characterised in that the reduction catalyst (14) comprises at least one modular-structured catalytic layer (16) of honeycomb ceramic material, where several layers (16) are arranged preferably at intervals and at least one layer in each case serves for reduction of NOₓ on the one hand and/or CO and hydrocarbons on the other hand.

4. Plant (10) according to claim 3, characterised in that the ceramic material has at least superficially a porous, preferably microporous, structure with integrated catalytically active material.

5. Plant (10) according to any of claims 1 to 4, characterised in that the catalytically active material in the flow channels (66) consists of active metal oxides for reduction of NOₓ.

6. Plant (10) according to claim 5, characterised in that the catalytically active material consists of selectively active vanadium pentoxide.

7. Plant (10) according to any of claims 1 to 6, characterised in that the wall cross sections (68) of the honeycombs (62) of the reduction catalyst (14) are screened upstream by at least one template (72) which preferably does not lie directly on the honeycomb structure.

8. Plant (10) according to claim 7, characterised in that a tapping, shaking or vibration mechanism is provided which acts on the screening template (72).

9. Plant (10) according to claim 7 or 8, characterised in that the screening template (72) consists of at least one metal plate perforated approximately corresponding to the honeycomb structure, or corresponding sheet metal strips.

## Revendications

1. Installation (10) d'épuration des gaz d'échappement d'un four rotatif à ciment équipé d'un échangeur de chaleur (12), qui inclut au moins un catalyseur de réduction (14) pour composants polluants gazeux, qui est d'une configuration de base en nids d'abeille et comporte sur le côté d'entrée une injection (20) de milieu de réaction, et un séparateur (26) de poussières,
caractérisée en ce que le catalyseur de réduction (14)
- est agencé immédiatement après le four rotatif (12), c'est-à-dire avant le dépoussiérage,
- comporte des moyens pour souffler à partir du bas dans des canaux (66) de circulation du catalyseur de réaction (14) verticaux ou inclinés au maximum d'environ 45° par rapport à la verticale, et comporte aussi
- des canaux de circulation (66) dont les dimensions linéaires minimales (a) en coupe transversale sont d'au moins 10 mm.

2. Installation (10) selon la revendication 1, caractérisée ,en ce que le catalyseur de réaction (14) comporte des canaux de circulation (66) dont les dimensions linéaires minimales (a) en coupe transversale sont de 10 à 20 mm.

3. Installation (10) selon la revendication 1 ou 2, caractérisée en ce que le catalyseur de réduction (14) comporte au moins une couche catalytique (16) de structure modulaire en matière céramique en forme de nids d'abeilles et comporte de préférence plusieurs couches (16) agencées à distance l'une de l'autre dont au moins une couche sert à réduire NOₓ et/ou au moins une autre à réduire CO et des carbures d'hydrogène.

4. Installation (10) selon la revendication 3, caractérisée en ce que la matière céramique comporte au moins en surface une structure poreuse, de préférence microporeuse dans laquelle une matière à effet catalytique est intégrée.

5. Installation (10) selon l'une quelconque des revendications 1 à 4 caractérisée en ce que la matière à effet catalytique agencée dans les canaux de circulation (66) pour la réduction de NOₓ se compose d'oxydes métalliques actifs.

6. Installation (10) selon la revendication 5, caractérisée en ce que la matière à effet catalytique se compose de pentoxyde de vanadium à effet sélectif.

7. Installation (10) selon l'une quelconque des revendications 1 à 6, caractérisée en ce que les sections transversales (68) des parois des nids d'abeilles (62) du catalyseur de réduction (14) sont protégées en amont par au moins un gabarit (72) qui de préférence ne repose pas directement sur la structure en nids d'abeilles.

8. Installation (10) selon la revendication 7, caractérisée en ce qu'elle comprend un mécanisme d'impact, de secousses ou de vibrations qui intervient sur le gabarit de protection (72).

9. Installation (10) selon la revendication 7 ou 8, caractérisée en ce que le gabarit de protection (72) se compose d'au moins une tôle métallique, à perforations correspondant approximativement à la structure en nids d'abeilles, ou de bandes de tôles correspondantes.
